Europäisches Patentamt

European Patent Office

Office européen des brevets

(19)

(11) Numéro de publication : **0 056 918 B1**

# (12) FASCICULE DE BREVET EUROPÉEN

(45) Date de publication du fascicule du brevet :
05.03.86

(21) Numéro de dépôt : 81402045.9

(22) Date de dépôt : 22.12.81

(51) Int. Cl.⁴ : **F 16 D 69/02**, F 16 D 65/02

(54) **Plaquette de frein à disque.**

(30) Priorité : 28.01.81 FR 8101570
27.11.81 FR 8122280

(43) Date de publication de la demande :
04.08.82 Bulletin 82/31

(45) Mention de la délivrance du brevet :
05.03.86 Bulletin 86/10

(84) Etats contractants désignés :
DE GB IT

(56) Documents cités :
DE-A- 2 508 720
DE-A- 2 742 122
DE-U- 7 036 224
FR-A- 2 273 980

(73) Titulaire : **ABEX EQUIPEMENT S.A.**
**58, rue Juliette-Adam**
**F-91190 Gif-sur-Yvette (FR)**

(72) Inventeur : **Kazuro, Jean M.**
**2, Square de Compiègne**
**F-60400 Noyon (FR)**
Inventeur : **Deperrois, Michel R.**
**1, rue de Vogue**
**F-60150 Thourotte (FR)**

(74) Mandataire : **Clanet, Denis et al**
**Cabinet Beau de Loménie 55, rue d'Amsterdam**
**F-75008 Paris (FR)**

**Description**

La présente invention a pour objet un procédé de fabrication d'une plaquette de frein à disque.

Pour atténuer ou supprimer le bruit occasionné par les vibrations au cours du freinage, il existe différentes solutions et notamment un procédé qui consiste à revêtir totalement la plaquette de frein d'une couche mince de peinture à base de caoutchouc, ainsi qu'il est décrit dans le document FR-A-2 273 980, représentant le préambule de la revendication 1.

Ce procédé présente malgré tout les inconvénients suivants.

En raison de son épaisseur qui est supérieure à celle des revêtements anticorrosion classiques (revêtement caoutchouc 0,1 mm maximum, revêtement anti-corrosion 0,025 mm), il est nécessaire d'utiliser des armatures métalliques de dimensions différentes pour permettre un bon coulissement dans les zones de guidage.

En effet, un même organe de freinage peut être monté sur différents types de véhicules qui ne nécessitent pas tous un revêtement contre le bruit, ce qui contraint à utiliser des armatures métalliques différentes selon qu'elles seront ou non revêtues de peinture à base de caoutchouc.

D'après l'expérience acquise dans l'utilisation du revêtement décrit dans le document FR-A-2 273 980, il a été démontré que, contrairement à l'une des caractéristiques de ce procédé, il est nécessaire afin de renforcer l'action contre le bruit, de déposer une couche de revêtement supérieure à 0,1 mm.

Les exemples de mélange constituant le revêtement, cités dans le document FR-A-2 273 980, en raison de leur faible viscosité nécessiteraient des applications répétées du liquide pour obtenir l'épaisseur désirée, ce qui industriellement augmenterait le prix de revient de la plaquette.

Par ailleurs, le revêtement décrit dans le brevet est censé assurer deux fonctions, c'est-à-dire empêcher le bruit et la corrosion de l'armature métallique. L'expérience acquise dans l'utilisation de ce revêtement indique, que du fait de la composition du mélange (40 à 50 % d'eau) et de sa mise en œuvre sur des armatures métalliques non protégées, il se produit déjà un début de corrosion provoqué par l'eau qui, en outre, lors de la vulcanisation reste emprisonnée en partie entre la couche vulcanisée et l'armature métallique et peut alors continuer son action oxydante.

Enfin, on peut constater de plus une mauvaise adhérence entre le revêtement caoutchouc et l'armature métallique non protégée, ce qui provoque un pelage du revêtement en cours d'utilisation, d'où une atténuation des effets contre le bruit et contre la corrosion.

Par ailleurs on connaît le document DE-A 2 508 720 qui prévoit de munir la face arrière de la plaque de support correspondant aux zones fonctionnelles d'appui d'au moins un piston d'une couche dont l'épaisseur est égale à 1 mm.

Cependant il n'est indiqué aucun moyen d'appliquer une telle couche antibruit sur la face arrière du support et une couche d'une telle épaisseur risque de se détacher si elle n'est pas appliquée par un moyen adéquat.

Conformément à la présente invention, on utilise un procédé selon le préambule de la revendication 1 dans lequel un revêtement additionnel contre le bruit plus épais qu'un premier revêtement contre la corrosion de faible épaisseur, est appliqué seulement sur la face arrière de la plaque de support correspondant aux zones fonctionnelles d'appui d'au moins un piston et d'un étrier, lequel revêtement additionnel est constitué à base de latex sous une épaisseur supérieure à 0,1 mm et est appliqué sur la plaque de support par sérigraphie au moyen d'un écran à mailles.

Cette disposition permet de dissocier les effets contre la corrosion et contre le bruit.

L'effet contre la corrosion est obtenu par un revêtement traditionnel de faible épaisseur sur la totalité de la plaquette au moyen notamment d'une peinture d'une métallisation, d'un cadmiage ou d'un zingage.

En ce qui concerne l'effet contre le bruit celui-ci est obtenu en localisant le revêtement à base de latex dans les zones fonctionnelles d'appui du ou des pistons et de l'étrier, ce qui évite l'utilisation d'armature métalliques spéciales pour un revêtement contre le bruit.

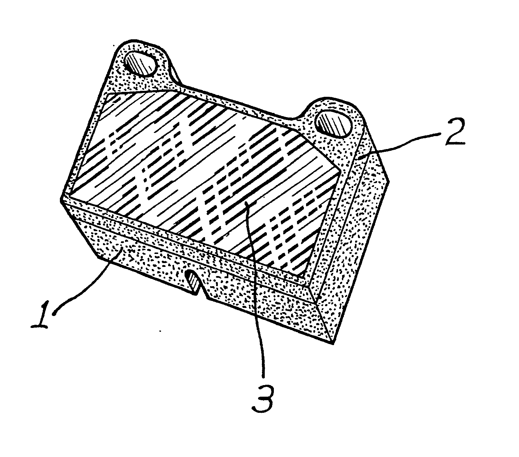

D'autres caractéristiques et avantages de l'invention seront mieux compris à la lecture de la description qui va suivre d'un mode de réalisation et en se référant au dessin annexé, sur lequel ;

la figure unique est une vue en perspective d'une plaquette de frein à disque traitée suivant l'invention.

A la figure unique on a représenté une plaque de frein à disque qui comprend une garniture de friction 1 qui est fixée sur une plaque de support 2 constituée généralement d'une armature métallique. La totalité de la plaquette de frein comprenant la garniture de friction 1 et la plaque de support 2 est recouverte d'un revêtement anticorrosion traditionnel de faible épaisseur, ledit revêtement étant constitué notamment d'une peinture d'une métallisation, d'un cadmiage, ou d'un zingage.

En ce qui concerne l'effet contre le bruit celui-ci est assuré par un revêtement à base de latex qui est appliqué sur la face arrière 3 de la plaque de support 2 suivant une zone fonctionnelle d'appui d'un ou plusieurs pistons et d'un étrier du dispositif de freinage.

Afin d'améliorer l'effet contre le bruit, le revêtement sur la partie 3 de la plaque de support présente une épaisseur qui est supérieure à 0,1 mm, ledit revêtement étant déposé en une seule opération.

L'épaisseur du revêtement supérieure à 0,1 mm nécessite une viscosité élevée du mélange supérieure à 10 000 centipoises.

**0 056 918**

Il est nécessaire d'utiliser dans ce but un mélange ayant la composition générale suivante :

|  |  |  |
|---|---|---|
| | — Latex (SBR, Nitrile, polychloroprène... nitrile carboxylé...) | 100 g |
| Dispersion aqueuse à 50 % | — Charge (Kaolin, talc, blanc de champagne, silice, craie, carbonate de calcium...) | 35 à 65 g |
| " | — Soufre | 1 à 7 g |
| " | — Accélérateurs (MBT, MBTS, ZMBT, ZDBC, tétraéthylènepenta-mine, aminoéthylpipérazine, xylènediamine...) | 1 à 13 g |
| " | — Oxyde de zinc | 6 à 10 g |
| " | — Oxyde de magnésium | 0 à 8 g |
| " | — Résine phénolique | 0 à 13 g |
| " | — Dispersant (polyacrylate de sodium disulfonate de sodium...) | 3 à 6 g |
| " | — Antimousse (bromure de cétyltriméthylammonium, silicone...) | 0,3 à 1,5 g |
| " | — Antioxygène (produit de condensation acétone diphénylamine hydroxytoluène butylé dicumyldiphénylamine monobenzylé-ther d'hydroquinone) | 0,5 à 1,5 g |
| " | — Agents stabilisants (bis.p.crésol, alkylphénols, p-aminophénol, phosphite d'alkylaryle, t.alkyl.p.crésol, condensat d'alcool gras et d'oxyde d'éthylène, sulfonate de sodium d'oléyl p.anisidine) | 0 à 4 g |
| " | — Colorant (noir par exemple) | 3 à 8 g |
| " | — Epaississant (hydroxyéthylcellulose, hydroxypropylcellulose) | 7 à 16 g |

A partir de cette composition générale du mélange, les exemples suivants se sont avérés particulièrement avantageux.

### Exemple 1

| | |
|---|---|
| Latex SBR | 100 g |
| Soufre | 3,60 g |
| Oxyde de zinc | 8,00 g |
| Mercaptobenzothiazolate de zinc | 7,81 g |
| Mercaptobenzothiazole | 4,24 g |
| Kaolin | 62,18 g |
| Colorant noir | 5,81 g |
| Hydroxyéthylcellulose | 14,61 g |
| Agent antimousse | 1,02 g |
| Agent dispersant | 6,02 g |
| Agent antioxygène | 0,75 g |

### Exemple 2

| | |
|---|---|
| Latex polychloroprène | 100 g |
| Oxyde magnésium | 6,20 g |
| Oxyde zinc | 9,46 g |
| Soufre | 7,38 g |
| Dibutyldithiocarbamate de zinc | 3,69 g |
| Talc | 23,12 g |
| Blanc de champagne | 25,92 g |
| Agent stabilisant | 3,19 g |
| Agent antimousse | 1,11 g |
| Agent dispersant | 8,26 g |
| Colorant noir | 4,73 g |
| Hydroxypropylcellulose | 14,93 g |

### Exemple 3

| | |
|---|---|
| Latex nitrile | 100 g |
| Soufre | 5,68 g |
| Oxyde de zinc | 8,44 g |
| Mercaptobenzothiazole | 3,09 g |
| Carbonate de calcium | 39,40 g |
| Colorant noir | 4,40 g |
| Agent antimousse | 0,51 g |

3

| | |
|---|---|
| Agent dispersant | 4,82 g |
| Agent antioxygène | 1,02 g |
| Hydroxyéthylcellulose | 11,72 g |

## Exemple 4

| | |
|---|---|
| Latex nitrile carboxyle | 100 g |
| Oxyde de zinc | 7,92 g |
| Soufre | 2,65 g |
| Disulfure de benzothiazile | 1,32 g |
| Résine phénolique | 12,31 g |
| Craie | 37,68 g |
| Silice | 19,32 g |
| Colorant noir | 3,64 g |
| Hydroxyéthylcellulose | 7,92 g |
| Agent antimousse | 0,42 g |
| Agent dispersant | 3,26 g |
| Agent antioxygène | 0,88 g |

Pour bien localiser le revêtement à base de latex sur la partie 3 de la plaque de support, on peut utiliser un procédé dans lequel le mélange liquide est appliqué sur la plaque de support par sérigraphie au moyen d'un écran de soie à mailles larges de l'ordre de 0,25 à 1 mm² par maille.

Il est également possible d'utiliser un procédé dans lequel le mélange liquide devant constituer le revêtement est déposé en multicordons jointifs sur la partie 3 de la plaque de support 2 au moyen d'un conduit ou rampe présentant une série de trous espacés au travers desquels est projeté sous pression le mélange à base de latex.

Pour améliorer l'adhérence entre le revêtement contre la corrosion dans le cas de l'utilisation d'une peinture et le revêtement à base de latex, on procède simultanément aux opérations de vulcanisation du revêtement en caoutchouc et de polymérisation de la peinture.

Ces opérations peuvent être effectuées soit en étuve, soit en four tunnel pendant 20 minutes à 170 °C.

On a constaté que le revêtement contre le bruit peut être réalisé également à partir de dissolution de caoutchouc ou d'élastomères solides ou liquides contenant les charges, les colorants et les accélérateurs de vulcanisation ou de polymérisation appropriés.

Les produits suivants sont utilisables comme base de la composition :
— caoutchouc naturel ou polyisoprènes,
— polymères et copolymères de butadiène,
— polychloroprènes,
— copolymères isobutylène-isoprène,
— thioplastes,
— caoutchoucs d'épichlorhydrine,
— dérivés de polyuréthanes ou d'huiles d'uréthanes,
— dérivés de silicone.

Les polyuréthanes et leurs dérivés constituent une forme préférée d'utilisation suivant l'invention par suite de leur bonne résistance à l'abrasion. Il est possible de les employer sous plusieurs formes :

dans un mélange avant emploi des solutions préparées séparément de polyisocyanates et de polyalcools ou de polyesters à groupements hydroxyles en excès.

La stabilité de la solution prête à l'emploi est considérablement améliorée lorsque l'on utilise des générateurs de di- ou triisocyanates (par exemple bisphényluréthane, produit d'addition de l'HDI et des esters acétiques ou maloniques), ceux-ci appelés également isocyanates bloqués, permettent d'employer certains solvants à groupe OH s'évaporant avant la formation d'isocyanate et leur réaction avec les groupements hydroxyles,
— dissolution de caoutchouc thermoplastique polyuréthane précondensé et vulcanisé ensuite à l'aide de peroxydes à des températures de l'ordre de 150 °C.

A partir de cette base de la composition du mélange, les exemples suivants se sont avérés particulièrement avantageux.

## Exemple 1

| | |
|---|---|
| Chlorobutyle | 50 g |
| Caoutchouc styrène-butadiène | 50 g |
| Craie | 50 g |
| Magnésie | 1 g |
| Résine phénolique terpénique | 20 g |
| Polybutène | 40 g |
| Silice précipitée hydratée | 50 g |

0 056 918

Exemple 2

| Caoutchouc naturel | 100 g |
| Résine de coumarone dure | 22 g |
| Craie | 35 g |
| Soufre | 17 g |
| Pentaméthylène-dithiocarbamate de pipéridine | 3 g |
| Dibutylamine | 1,5 g |
| Mercaptobenzothiazole | 1 g |
| Xylène | 400-700 g |

Exemple 3

| Caoutchouc acrylonitrile | 100 g |
| Silicate de calcium | 50 g |
| Oxyde de titane | 12 g |
| Magnésie légère | 2,5 g |
| Résine phénolique | 50 g |
| Caoutchouc chloré (125 c.p.s.) | 20 g |
| Soufre | 2 g |
| Disulfure de benzothiazyle | 1 g |
| Dissoudre à 50 % dans la méthyléthylcétone | |

Exemple 4

| Polyuréthane | 100 g |
| Xylène | 13 g |
| Méthylétylcétone | 15 g |
| Résine silicone spécifique (à 50 %) | 7,6 g |
| Solution de polyacrylate de sodium | 2,5 g |

Exemple 5

| Polychloroprène | 100 g |
| Phényl-β-naphtylamine | 3 g |
| Magnésie calcinée légère | 6 g |
| Carbon Black | 36 g |
| Acide stéarique | 2,5 g |
| Cyclohexane | 150 g |
| Toluène | 200 g |

**Revendications**

1. Procédé de fabrication d'une plaquette de frein à disque comprenant une plaque de support (2) et une garniture de friction fixée sur cette dernière, un premier revêtement contre la corrosion de faible épaisseur est appliqué sur la totalité de la plaquette (1 et 2), caractérisé en ce qu'ensuite un revêtement additionnel contre le bruit plus épais que le premier est appliqué seulement sur la face arrière de la plaque (2) de support correspondant aux zones fonctionnelles (3) d'appui d'au moins un piston et d'un étrier, lequel revêtement additionnel est constitué à base de latex sous une épaisseur supérieure à 0,1 mm et est appliqué sur la plaque de support (2) par sérigraphie au moyen d'un écran à mailles.

2. Procédé de fabrication suivant la revendication 1 caractérisé en ce que l'écran présente des mailles dont la dimension est de 0,25 à 1 mm² par maille.

3. Procédé de fabrication suivant la revendication 1 ou 2, caractérisé en ce que les opérations de polymérisation du revêtement anti-corrosion et de vulcanisation du revêtement à base de latex sont effectuées simultanément.

4. Procédé de fabrication suivant la revendication 3, caractérisé en ce que les opérations de polymérisation et de vulcanisation sont effectuées dans un four pendant 20 minutes à 170 °C.

5. Procédé de fabrication suivant une des revendications 1 à 4, caractérisé en ce que le revêtement additionnel contre le bruit est composé d'un mélange contenant 100 g de latex, une dispersion aqueuse à 50 % contenant 35 à 65 g de charge, 1 à 7 g de soufre, 1 à 13 g d'accélérateur de vulcanisation, 6 à 10 g d'oxyde de zinc, 0 à 8 g d'oxyde de magnésium, 0 à 13 g d'une résine phénolique, 3 à 6 g d'agent dispersant, 0,3 à 1,5 g d'agent antimousse, 0,5 à 1,5 g d'agent antioxygène, 0 à 4 g d'agents stabilisants une dispersion aqueuse à 30 % contenant 3 à 8 g d'un agent colorant et une dispersion aqueuse à 10 % contenant 7 à 16 g d'un agent épaississant.

5

0 056 918

6. Procédé de fabrication suivant une des revendications 1 à 4, caractérisé en ce que le revêtement additionnel contre le bruit appliqué sur la face arrière de la plaque est constitué d'une dissolution à base de :

a) Caoutchouc naturel ou polyisoprènes,
b) Polymères et copolymères de butadiène,
c) Polychloroprènes,
d) Copolymères isobutylène-isoprène,
e) thioplastes,
f) Caoutchoucs d'épichlorhydrine,
g) dérivés de polyuréthanes ou huiles d'uréthanes,
h) dérivés de silicone.

7. Procédé de fabrication suivant la revendication 6, caractérisé en ce que le revêtement additionnel contre le bruit est composé d'un mélange contenant 50 g de chlorobutyle, 50 g de caoutchouc styrène-butadiène, 50 g de craie, 1 g de magnésie, 20 g de résine phénolique terpénique, 40 g de polybutène, 50 g de silice précipitée hydratée.

8. Procédé de fabrication suivant la revendication 6, caractérisé en ce que le revêtement additionnel contre le bruit est composé d'un mélange contenant 100 g de caoutchouc nature, 22 g de résine de coumarone dure, 35 g de craie, 17 g de soufre, 3 g de pentaméthylène-dithiocarbamate de pipéridine, 1,5 g de dibutylamine, 1,0 g de mercaptobenzothiazole, 400 à 700 g de xylène.

9. Procédé de fabrication suivant la revendication 6, caractérisé en ce que le revêtement additionnel contre le bruit est composé d'un mélange contenant 100 g de caoutchouc acrylonitrile, 50 g de silicate de calcium, 12 g d'oxyde de titane, 2,5 g de magnésie légère, 50 g de résine phénolique, 20 g de caoutchouc chloré, 2 g de soufre, 1 g de disulfure de benzothiazyle.

10. Procédé de fabrication suivant la revendication 6, caractérisé en ce que le revêtement additionnel contre le bruit est composé d'un mélange contenant 100 g de polyuréthane, 13 g de xylène, 15 g de méthyléthylcétone, 7,6 g de résine silicone spécifique (à 50 %), 2,5 g de solution de polyacrylate de sodium.

11. Procédé de fabrication suivant la revendication 6, caractérisé en ce que le revêtement additionnel contre le bruit est composé d'un mélange contenant 100 g de polychloroprène, 3 g de phényl-β-naphtyl-amine, 6 g de magnésie calcinée légère, 5 g d'oxyde de zinc, 36 g de carbon Black, 2,5 g d'acide stéarique, 150 g de cyclohexane, 200 g de toluène.

**Claims**

1. Process for manufacturing a disc brake pad comprising a supporting plate (2) and a friction lining secured to the latter, a first anti-corrosion coating, of low thickness, is applied over the whole surface of the pad (1 and 2), characterized in that an additional noise-insulating coating, thicker than the first, is then applied only on the rear face of the supporting plate (2) corresponding to the functional supporting zones (3) of at least one piston and a stirrup member, said additional coating being made from latex, under a thickness greater than 0.1 millimeter, and being applied on the supporting plate (2) by serigraphy, by means of a mesh screen.

2. Manufacturing process according to claim 1, characterized in that the screen has meshes whose dimension is of 0.25 to 1 mm² per mesh.

3. Manufacturing process according to claim 1 or 2, characterized in that the polymerization operation of anti-corrosion coating, and the vulcanization operation of the latex-containing coating are simultaneously carried out.

4. Manufacturing process according to claim 3, characterized in that the polymerization and vulcanization operations are carried out in an oven for 20 minutes at 170 °C.

5. Manufacturing process according to any one of claims 1 to 4, characterized in that the additional noise-insulating coating is constituted by a mixture containing 100 g of latex, a 50 % aqueous dispersion containing 35 to 65 g of filler, 1 to 7 g of sulphur, 1 to 13 g of vulcanization accelerator, 6 to 10 g of zinc oxide, 0 to 8 g of magnesium oxide, 0 to 13 g of a phenolic resin, 3 to 6 g of a dispersing agent, 0.3 to 1.5 g of anti-foam agent, 0.5 to 1.5 g of antioxydent agent, 0 to 4 g of agents for stabilizing a 30 % aqueous dispersion containing 3 to 8 g of a dyeing agent and a 10 % aqueous dispersion containing 7 to 16 g of a thickening agent.

6. Manufacturing process according to any one of claims 1 to 4, characterized in that the additional noise-insulating coating applied over the rear face of the plate is constituted by a solution containing :

a) natural rubber or polyisoprenes,
b) butadiene polymers and copolymers,
c) polychloroprenes,
d) isobutylene-isoprene copolymers,
e) thioplasts,
f) epichlorohydrin rubber,
g) polyurethane derivatives or urethane oils,
h) silicone derivatives.

7. Manufacturing process according to claim 6, characterized in that the additional noise-insulating coating is constituted by a mixture containing 50 g of chlorobutyl, 50 g of styrene-butadiene rubber, 50 g of chalk, 1 g of magnesia, 20 g of terpenic phenolic resin, 40 g of polybutene, 50 g of hydrated precipitated silica.

8. Manufacturing process according to claim 6, characterized in that the additional noise-insulating coating is constituted by a mixture containing 100 g of natural rubber, 22 g of hard coumarone resin, 35 g of chalk, 17 g of sulphur, 3 g of piperidine pentamethylene-dithiocarbamate, 1.5 g of dibutylamine, 1.0 g of mercaptobenzothiazole, 400 to 700 g of xylene.

9. Manufacturing process according to claim 6, characterized in that the additional noise-insulating coating is constituted by a mixture containing 100 g of acrylonitrile rubber, 50 g of calcium silicate, 12 g of titanium oxide, 2.5 g of light magnesia, 50 g of phenolic resin, 20 g of chlorinated rubber, 2 g of sulphur, 1 g of benzothiazyl disulphide.

10. Manufacturing process according to claim 6, characterized in that the additional noise-insulating coating is constituted by a mixture containing 100 g of polyurethane, 13 g of xylene, 15 g of methyletylketone, 7.6 g of specific silicone resin (at 50 %), 2.5 g of a solution of sodium polyacrylate.

11. Manufacturing process according to claim 6, characterized in that the additional noise-insulating coating is constituted by a mixture containing 100 g of polychloroprene, 3 g of phenyl-β naphthyl amine, 6 g of light calcinated magnesia, 5 g of zinc oxide, 36 g of Black carbon, 2.5 g of stearic acid, 150 g of cyclohexane, 200 g of toluene.

## Patentansprüche

1. Verfahren zur Herstellung einer Scheibenbremsplatte, bestehend aus einer Trägerplatte (2) und daran angebrachten Bremsbelägen, wobei ein erster dünner korrosionshemmender Überzug auf der Gesamtplatte (1 und 2) aufgebracht ist, dadurch gekennzeichnet, daß dann ein zusätzlicher lärmverhindernder Überzug, der dicker ist als der erste, nur auf der Rückseite der Trägerplatte (2), entsprechend den Anlegeflächen (3) mindestens eines Kolbens und eines Haltebügels, aufgebracht wird, wobei dieser zusätzliche Überzug auf Latex-Basis mit einer Dicke über 0,1 mm auf die Trägerplatte (2) durch Siebdruck mit einem Maschensieb aufgebracht wird.

2. Verfahren nach Anspruch 1, dadurch gekennzeichnet, daß der Überzug mit einem Sieb mit einer Maschenweite von 0,25 bis 1 mm² aufgebracht wird.

3. Verfahren nach Anspruch 1 oder 2, dadurch gekennzeichnet, daß die Polymerisation des korrosionshemmenden Überzugs und die Vulkanisation des Überzugs auf Latex-Basis gleichzeitig durchgeführt werden.

4. Verfahren nach Anspruch 3, dadurch gekennzeichnet, daß die Polymerisation und die Vulkanisation bei 170 °C in einem Ofen während 20 min durchgeführt werden.

5. Verfahren nach einem der Ansprüche 1 bis 4, dadurch gekennzeichnet, daß der zusätzliche lärmverhindernde Überzug aus einem Gemisch besteht, das 100 g Latex, eine 50-proz. wäßrige Dispersion von 35 bis 65 g Füllstoffen, 1 bis 7 g Schwefel, 1 bis 13 g Vulkanisationsbeschleuniger, 6 bis 10 g Zinkoxid, 0 bis 8 g Magnesiumoxid, 0 bis 13 g Phenolharz, 3 bis 6 g Dispergiermittel, 0,3 bis 1,5 g Schaumbremsmittel, 0,5 bis 1,5 g Antioxidans, 0 bis 4 g Stabilisatoren, eine 30-proz. wäßrige Dispersion von 3 bis 8 g Färbemittel und eine 10-proz. wäßrige Dispersion von 7 bis 16 g Eindickmittel enthält.

6. Verfahren nach einem der Ansprüch 1 bis 4, dadurch gekennzeichnet, daß der zusätzliche lärmverhindernde, auf der Rückseite der Platte aufgebrachte Überzug eine Lösung auf der Basis von :

a) natürlichem Kautschuk oder Polyisoprenen,
b) Butadienpolymeren oder -copolymeren,
c) Polychloroprenen,
d) Isobutylen-Isopren-Copolymeren,
e) Thioplasten,
f) Epichlorhydrin-Kautschuken,
g) Derivaten von Polyurethanen oder Urethanölen,
h) Silikonderivaten

ist.

7. Verfahren nach Anspruch 6, dadurch gekennzeichnet, daß der zusätzliche lärmverhindernde Überzug aus einem Gemisch besteht, das 50 g Chlorbutyl, 50 g Styrol-Butadien-Kautschuk, 50 g Kreide, 1 g Magnesiumoxid, 20 g Terpenphenolharz, 40 g Polybuten, 50 g ausgefällte hydratisierte Kieselsäure enthält.

8. Verfahren nach Anspruch 6, dadurch gekennzeichnet, daß der zusätzliche lärmverhindernde Überzug aus einem Gemisch besteht, das 100 g natürlichen Kautschuk, 22 g Cumaron-Hartharz, 35 g Kreide, 17 g Schwefel, 3 g Pentamethylen-piperidindithiocarbamat, 1,5 g Dibutylamin, 1,0 g Mercaptobenzothiazol und 400 bis 700 g Xylol enthält.

9. Verfahren nach Anspruch 6, dadurch gekennzeichnet, daß der zusätzliche lärmverhindernde Überzug aus einem Gemisch besteht, das 100 g Acrylnitril-Kautschuk, 50 g Calciumsilikat, 12 g Titanoxid, 2,5 g leichtes Magnesiumoxid, 50 g Phenolharz, 20 g Chlorkautschuk, 2 g Schwefel und 1 g Benzothiazyldisulfid enthält.

10. Verfahren nach Anspruch 6, dadurch gekennzeichnet, daß der zusätzliche lärmverhindernde Überzug aus einem Gemisch besteht, das 100 g Polyurethan, 13 g Xylol, 15 g Methylethylketon, 7,6 g 50-proz. spezielles Silikonharz und 2,5 g einer Natriumpolyacrylatlösung enthält.

11. Verfahren nach Anspruch 6, dadurch gekennzeichnet, daß der zusätzliche lärmverhindernde Überzug aus einem Gemisch besteht, das 100 g Polychloropren, 3 g Phenyl-β-naphthylamin, 6 g leichtes calciniertes Magnesiumoxid, 5 g Zinkoxid, 36 g Ruß, 2,5 g Stearinsäure, 150 g Cyclohexan und 200 g Toluol enthält.